# EUROPÄISCHE PATENTSCHRIFT

(11) **EP 1 451 025 B1**
(45) Veröffentlichungstag und Bekanntmachung des Hinweises auf die Patenterteilung: **10.08.2005**
(21) Anmeldenummer: 02804203.4
(22) Anmeldetag: 29.11.2002
(51) Int. Cl.: B60B 35/08, B60B 35/00

(54) **RADLAGERUNG AN EINEM ACHSKÖRPER FÜR FAHRZEUGE**
WHEEL BEARING ON AN AXLE BODY FOR VEHICLES
LOGEMENT DE ROUE SITUE SUR UN CORPS D'ESSIEU DESTINE A DES VEHICULES

(30) Priorität: 04.12.2001 DE 20119641 U
(43) Veröffentlichungstag der Anmeldung: 01.09.2004
(73) Patentinhaber: Otto Sauer Achsenfabrik Keilberg KG, 63856 Bessenbach-Keilberg (DE)
(72) Erfinder: DANTELE, Johann, 97525 Schwebheim (DE)
(74) Vertreter: KEIL & SCHAAFHAUSEN
(86) Internationale Anmeldenummer: PCT/EP2002/013469
(87) Internationale Veröffentlichungsnummer: WO 2003/047884

(56) Entgegenhaltungen:
- GB-A- 2 271 824
- US-A- 5 281 005
- US-A- 5 538 330

## Beschreibung

Die Erfindung bezieht sich auf eine Radlagerung an einem als Achsrohr ausgebildeten Achskörper für Fahrzeuge, insbesondere Nutzfahrzeuge, bei welcher das Rad z. B. über Radbolzen an einer an dem Achsstummel des Achsrohres drehbar gelagerten Radnabe befestigt und der Achsstummel als gesondertes Bauteil mit einem Endabschnitt des Achsrohres verspannt ist.

Für Personenkraftwagen-Achsen ist es bekannt, den Radstummel als gesondertes Bauteil über Flanschverbindungen an dem übrigen Teil des Achskörpers zu befestigen. Auf diese Weise soll die Schnittstelle zwischen Rad bzw. Radnabe und Achskörper, d. h. an dem Radlager, an eine Stelle zwischen Achsstummel und Achskörper verlegt werden, so dass bei einer Erneuerung der Bremsscheibe die Lagerung des Rades, d. h. das Radlager, nicht beeinträchtigt wird, weil es niemals mehr herausgenommen werden muss. Derartige Flanschverbindungen sind jedoch nicht geeignet, um die erheblichen Kräfte, welche bei Nutzfahrzeugen auftreten, aufzunehmen.

Deswegen ist bereits vorgeschlagen worden, den gesonderten Achsstummel mit einem konischen Verbindungsabschnitt zu versehen, welcher in einen zum Achsende hin offenen Innenkonus des Endabschnitts mittels einer axialen Schraube axial verspannt wird. Diese Radlagerung ist jedoch sehr aufwendig in Herstellung und Montage und kann außerdem zu einer unerwünschten Aufweitung des Endabschnittes des Achsrohres führen.

Aufgabe der vorliegenden Erfindung ist es daher, eine Radlagerung der eingangs genannten Art vorzuschlagen, welche einfach in der Herstellung und Montage sowie dauerhaft in ihrer Funktion ist.

Diese Aufgabe wird erfindungsgemäß z. B. dadurch gelöst, dass der Endabschnitt des Achsrohres innen zylindrisch ausgebildet, der Achsstummel mit einem außen entsprechend zylindrischen Verbindungsabschriitt in den Endabschnitt des Achsrohres eingepasst und der Endabschnitt des Achsrohres mit dem Verbindungsabschnitt des Achsstummels mittels wenigstens eines Klemmstücks, welches mittels eines Gewindebolzens in axialer Richtung zum Ende des Achsrohres verstellbar ist, radial verspannbar ist.

Auf diese Weise werden die Einspannkräfte von dem Verbindungsabschnitt des Achsstummels auf den Endabschnitt des Achsrohres großflächig übertragen, so dass selbst bei geringen Einspannkräften eine hohe Verbindungssicherheit zwischen Achsstummel und Achsrohr besteht. Außerdem ist die Montage und Demontage einer derartigen Radlagerung leicht und schnell auszuführen.

Dabei kann das Klemmstück als Spannkegel ausgebildet sein, welcher mit einer sich zu dem gegenüberliegenden Ende des Achsrohres öffnenden Innenkegelfläche des Verbindungsabschnitts des Achsstummels zusammenwirkt.

Bei einer alternativen Ausführungsform ist das Klemmstück bspw. als Spannkeil ausgebildet, welcher mit einer zu dem gegenüberliegenden Ende des Achsrohres weisenden Schrägfläche des Verbindungsabschnitts des Achsstummels zusammenwirkt.

Um ein einfacheres Aufspreizen des Verbindungsabschnittes des Achsstummels zu erreichen, kann die die Innenkegelfläche bildende Wandung des Verbindungsabschnitts wenigstens einen am inneren Ende des Verbindungsabschnitts offenen im Wesentlichen achsparallelen Spreizschlitz aufweisen. Dieser verjüngt sich vorzugsweise vom inneren Ende des Verbindungsabschnitts aus in Richtung des Endes des Achsrohres konisch. In dem letztgenannten Fall kann dann das Klemmstück als Kreuzkörper ausgebildet sein, welcher mit seinen Kreuzarmen in die sich konisch verjüngenden Spreizschlitze eingreifen. Beim Verspannen des Klemmstückes schieben sich daher die Kreuzarme des Kreuzkörpers immer weiter in die Spreizschlitze hinein, so dass insgesamt eine Aufweitung des Verbindungsabschnittes des Achsstummels und dessen Verspannung mit dem Achsrohr erfolgt.

In dem letztgenannten Fall kann der Klemmkörper in seinem von den Kreuzarmen bestimmten Außenumfang im Wesentlichen zylindrisch ausgebildet und an dem inneren zylindrischen Endabschnitt des Achsrohres geführt sein.

Die Verspannung des Klemmkörpers mit dem Verbindungsabschnitt kann auf einfache Weise dadurch erreicht werden, dass der axiale Gewindebolzen mit einem Gewindeabschnitt in einem Innengewinde des Klemmstücks aufgenommen und in dem Achsstummel drehbar gelagert ist. Hierbei wird auf geeignete Weise ein Mitdrehen des Klemmstückes verhindert.

Damit eine großflächige Verspannung des Verbindungsabschnitts des Achsstummels mit dem Endabschnitt des Achsrohres erfolgt, sollte das Klemmstück in einem bremsträgerfreien Bereich auf den Endabschnitt des Achsrohres einwirken. Damit dabei eine unerwünschte Aufweitung des Achsrohres zu seinem Ende hin vermieden wird, sollte der bremsträgerfreie Bereich des Endabschnittes des Achsrohres auf der dem Ende des Achsrohres abgewandten Seite des Bremsträgers liegen.

Der bremsträgerfreie Bereich des Achsrohres kann dabei vorteilhafterweise gegenüber dem restlichen Achsrohr verstärkt sein, damit die radialen Spreizkräfte sicher aufgenommen werden.

Weiter Ziele, Merkmale und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: ein Ausführungsbeispiel der erfindungsgemäßen Radlagerung, teilweise geschnitten und weggebrochen,
- Fig. 2: eine Darstellung des Ausführungsbeispiels gemäß Fig. 1 (ohne Bremsträger), wobei jedoch der Klemmkörper und der Gewindebolzen weggelassen sind,
- Fig. 3: eine stirnseitige Ansicht des Ausführungsbeispiels gemäß Fig. 1 aus Richtung III, in welchem der Bremsträger in seiner Lage auf dem Achsrohr zu sehen ist,
- Fig. 4: eine Darstellung entsprechend Fig. 1 für ein anderes Ausführungsbeispiel der Erfindung,
- Fig. 5: eine Darstellung gemäß Fig. 2 für das in Fig. 4 gezeigte Ausführungsbeispiel,
- Fig. 6: eine stirnseitige Ansicht des als Kreuzkörper ausgebildeten Klemmstücks aus Richtung VI in Fig. 4,
- Fig. 7: ein noch weiteres Ausführungsbeispiel einer die Erfindung aufweisende Radlagerung in einer Darstellung entsprechend Fig. 1,
- Fig. 8: das Ausführungsbeispiel von Fig. 7 (ohne Bremsträger) in einer anderen Schnittebene.

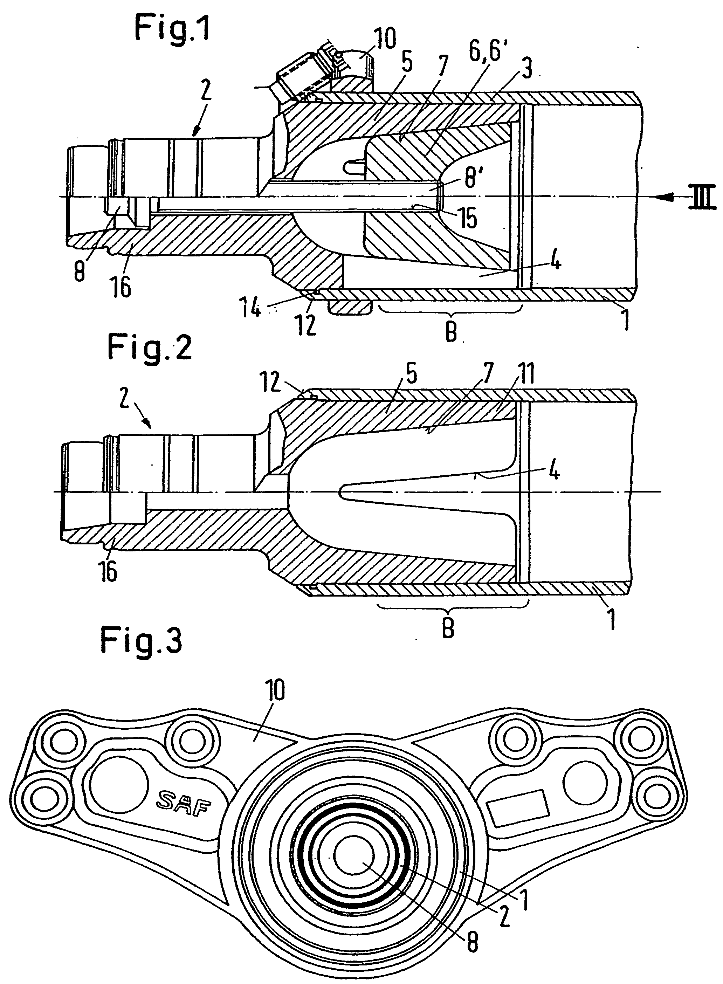

Die erfindungsgemäße Radlagerung ist gemäß den Figuren 1 bis 3 an einem als Achsrohr 1 ausgebildeten Achskörper für Fahrzeuge, insbesondere Nutzfahrzeuge, vorgesehen. Das (nicht dargestellte) Rad ist bei einer solchen Radlagerung bspw. über (ebenfalls nicht dargestellte) Radbolzen an einer an dem Achsstummel 2 des Achsrohres 1 drehbar gelagerten (nicht dargestellten) Radnabe befestigt. Der Achsstummel 2 ist als gesondertes Bauteil mit dem Endabschnitt 3 des Achsrohres 1 radial verspannt. Zu diesem Zweck ist der Endabschnitt 3 des Achsrohres 1 innen zylindrisch ausgebildet. Der Achsstummel 2 ist mit einem außen ebenfalls zylindrischen Verbindungsabschnitt 5 in den Endabschnitt 3 des Achsrohres 1 eingepasst. Dabei ist der Endabschnitt 3 des Achsrohres 1 mit dem Verbindungsabschnitt 5 des Achsstummels 2 mittels wenigstens eines Klemmstücks 6, welches mittels eines Gewindebolzens 8 in axialer Richtung zum Ende 12 des Achsrohres 1 verstellbar ist, radial verspannbar. Das Klemmstück 6 ist als Spannkegel 6' ausgebildet, welcher mit einer sich zum dem gegenüberliegenden Ende des Achsrohres 1 öffnenden Innenkegelfläche 7 des Verbindungsabschnitts 5 des Achsstummels 2 zusammenwirkt. Die die Innenkegelfläche 7 bildende Wandung 11 des Verbindungsabschnitts weist wenigstens einen am inneren Ende des Verbindungsabschnitts 5 offenen im Wesentlichen achsparallelen Spreizschlitz 4 auf. Die Spreizschlitze 4 verjüngen sich vom inneren Ende des Verbindungsabschnitts 5 aus in Richtung des Endes 12 des Achsrohres 1 konisch. Das Verspannen des Klemmstückes 6 gegenüber dem Verbindungsabschnitt 5 und damit des Verbindungsabschnittes 5 gegenüber dem Endabschnitt 3 des Achsrohres 1 erfolgt dadurch, dass der axiale Gewindebolzen 8 mit einem inneren Gewindeabschnitt 8' in ein Inngewinde 15 des Klemmstücks 6 eingreift und drehbar in dem Achsstummel 2 gelagert ist. Wenn mehrere Spreizschlitze 4 vorgesehen sind, sind diese vorzugsweise gleichmäßig über den Umfang der Wandung 11 des Verbindungsabschnittes 5 des Achsstummels 2 verteilt. Wie man sieht, wirkt das Klemmstück 6 in einem inneren bremsträgerfreien Bereich B auf den Endabschnitt 3 des Achsrohres 1 ein, so dass ein großflächiger Kraftschluss entsteht, gleichzeitig aber eine unerwünschte Aufweitung des Endes 12 des Achsrohres 1 verhindert ist. Es ist zweckmäßig, das Klemmstück 6, 6' gegenüber dem Achsstummel 2 gegen Verdrehen zu sichern, z. B. durch mindestens eine örtliche Überhöhung, die in einen der Spreizschlitze 4 ragt.

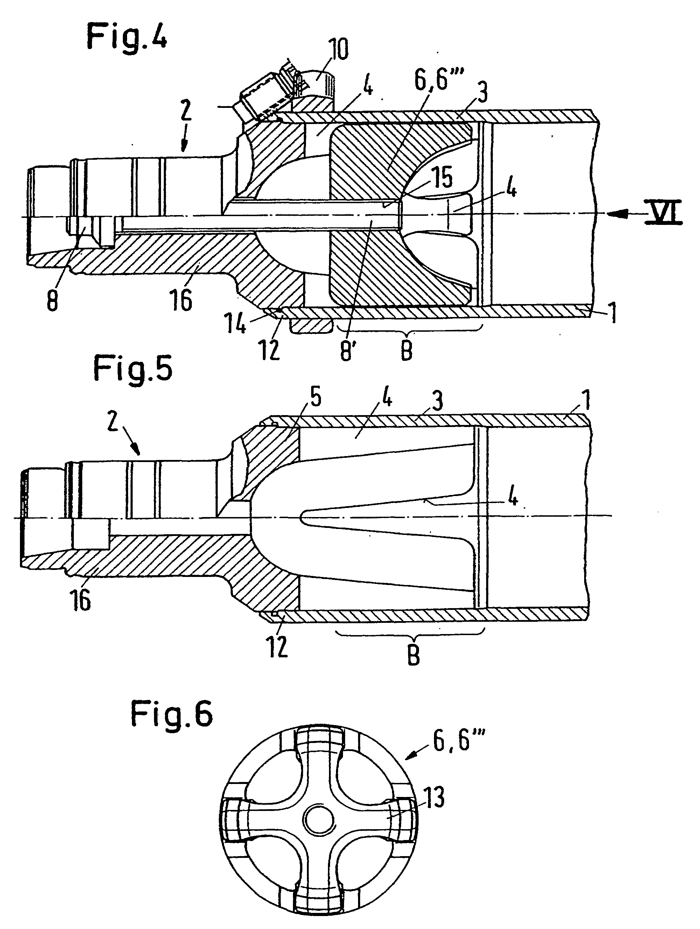

Bei dem in den Figuren 4 bis 6 dargestellten Ausführungsbeispiel ist das Klemmstück 6 als Kreuzkörper 6''' ausgebildet , welcher mit seinen Kreuzarmen 13 in die sich konisch in Richtung des Endes 12 des Achsrohres 1 verjüngenden Spreizschlitz 4 eingreift. Mit seiner von den Kreuzarmen 13 bestimmten im Wesentlichen zylindrischen Außenumfangsfläche kann der Kreuzkörper 6"' an dem innen zylindrischen Achsrohr 1 geführt sein. Beim Verspannen des Kreuzkörpers 6''' mit Hilfe des Gewindebolzens 8 fahren die Kreuzarme 13 immer weiter in die sich in Bewegungsrichtung verjüngenden Spreizschlitze 4 hinein, wodurch ein Aufweiten des Verbindungsabschnittes 5 erfolgt.

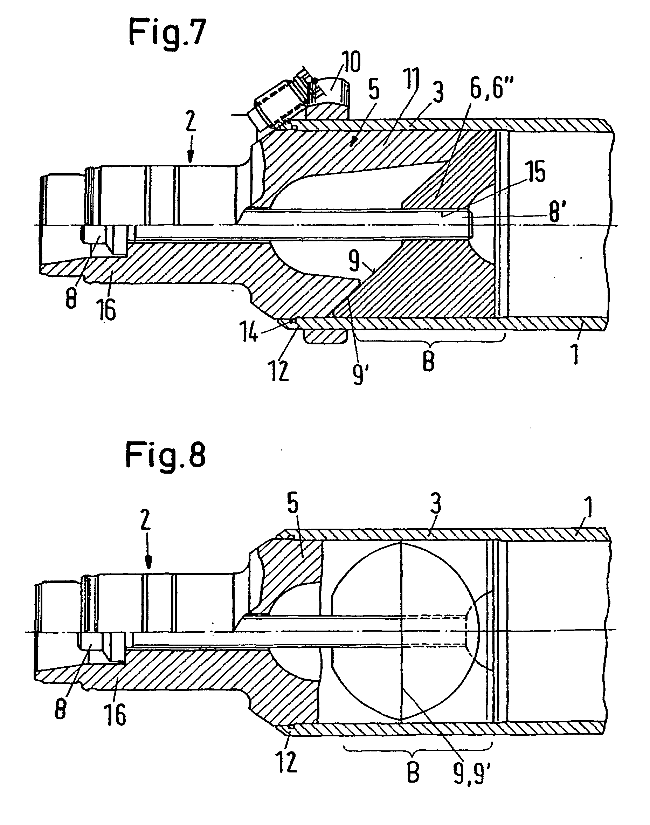

Bei dem in den Figuren 7 und 8 dargestellten weiteren Ausführungsbeispiel der Erfindung ist das Klemmstück 6 als- Spannkeil 6" ausgebildet, welcher aufgrund eine Schrägfläche 9' mit einer zu dem gegenüberliegenden Ende des Achsrohres 1 weisenden Schrägfläche 9 des Verbindungsabschnittes 5 des Achsstummels 2 zusammenwirkt. Hier sind keine Spreizschlitze 4 in der Wandung 11 des Verbindungsabschnitts 5 erforderlich. Beim Verspannen, also Betätigen des Gewindebolzens 8, verkeilen sich der Verbindungsabschnitt 5 und der Spannkeil 6" innerhalb des Achsrohres 1, um - wie bei den anderen Ausführungsbeispielen auch - eine sichere aber lösbare Verbindung des Achsstummels 2 mit dem Achsrohr 1 auch bei hohen Kräften, welche bei Nutzfahrzeugen auftreten, zu erreichen.

Bei Austausch einer Bremsscheibe braucht erfindungsgemäß jeweils lediglich der Achsstummel 2 von dem Achsrohr 1 gelöst zu werden, ohne dass das auf dem aus dem Achsrohr 1 herausragenden Zapfen 16 des Achsstummels 2 sitzende (nicht dargestellte) Radlager tangiert wird.

### Bezugszeichenliste:

- 1: Achsrohr
- 2: Achsstummel
- 3: Endabschnitt des Achsrohres 1
- 4: Spreizschlitze
- 5: Verbindungsabschnitt
- 6, 6', 6", 6''': Klemmstück, Spannkegel, Spannkeil, Kreuzkörper
- 7: Innenkegelfläche
- 8, 8': Gewindebolzen, Gewindeabschnitt
- 9, 9': Schrägflächen
- 10: Bremsträger
- 11: Wandung
- 12: Ende des Achsrohres 1
- 13: Kreuzarme
- 14: O-Ring
- 15: Innengewinde
- 16: Zapfen

## Patentansprüche

1. Radlagerung an einem als Achsrohr (1) ausgebildeten Achskörper für Fahrzeuge, insbesondere Nutzfahrzeuge, bei welcher das Rad z. B. über Radbolzen an einer an dem Achsstummel (2) des Achsrohres (1) drehbar gelagerten Radnabe befestigt und der Achsstummel (2) als gesondertes Bauteil mit einem Endabschnitt (3) des Achsrohres (1) verspannt ist, **dadurch gekennzeichnet, dass** der Endabschnitt (3) des Achsrohres (1) innen zylindrisch ausgebildet, der Achsstummel (2) mit einem außen entsprechend zylindrischen Verbindungsabschnitt (5) in den Endabschnitt (3) des Achsrohres (1) eingepasst und der Endabschnitt (3) des Achsrohres (1) mit dem Verbindungsabschnitt (5) des Achsstummels (2) mittels wenigstens eines Klemmstücks (6), welches mittels eines Gewindebolzens (8) in axialer Richtung zum Ende (12) des Achsrohres (1) verstellbar ist, radial verspannt ist.

2. Radlagerung nach Anspruch 1, **dadurch gekennzeichnet, dass** das Klemmstück (6) als Spannkegel (6) ausgebildet ist, welcher mit einer sich zu dem gegenüberliegenden Ende des Achsrohres (1) öffnenden Innenkegelfläche (7) des Verbindungsabschnitts (5) des Achsstummels (2) zusammenwirkt.

3. Radlagerung nach Anspruch 1, **dadurch gekennzeichnet, dass** das Klemmstück (6) als Spannkeil (64) ausgebildet ist, welcher mit einer zu dem gegenüberliegenden Ende des Achsrohres (1) weisenden Schrägfläche (9) des Verbindungsabschnitts (5) des Achsstummels (2) zusammenwirkt.

4. Radlagerung nach Anspruch 1 oder 2, **dadurch gekennzeichnet, dass** die die Innenkegelfläche (7) bildende Wandung (11) des Verbindungsabschnitts (5) wenigstens einen am inneren Ende des Verbindungsabschnitts (5) offenen, im Wesentlichen achsparallelen Spreizschlitz (4) aufweist.

5. Radlagerung nach einem der Ansprüche 1, 2 und 4, **dadurch gekennzeichnet, dass** sich die Spreizschlitze (4) vom inneren Ende des Verbindungsabschnitts (5) aus in Richtung des Endes des Achsrohres (1) konisch verjüngen.

6. Radlagerung nach Anspruch 5, **dadurch gekennzeichnet, dass** das Klemmstück (6) als Kreuzkörper (6''') ausgebildet ist, welcher mit seinen Kreuzarmen (13) in die sich konisch verjüngenden Spreizschlitz (4) eingreifen.

7. Radlagerung nach Anspruch 6, **dadurch gekennzeichnet, dass** der Klemmkörper (6) in seinem von den Kreuzarmen (13) bestimmten Außenumfang im Wesentlichen zylindrisch ausgebildet und an dem innen zylindrischen Endabschnitt (3) des Achsrohres (1) geführt ist.

8. Radlagerung nach einem der vorhergehenden Ansprüche, **dadurch gekennzeichnet, dass** der Gewindebolzen (8) mit einem Gewindeabschnitt (8') in einem Innengewinde (15) des Klemmstücks (6) aufgenommen und in dem Achsstummel (2) drehbar gelagert ist.

9. Radlagerung nach einem der vorhergehenden Ansprüche, **dadurch gekennzeichnet, dass** das Klemmstück (6) in einem bremsträgerfreien Bereich (B) auf den Endabschnitt (3) des Achsrohres (1) einwirkt.

10. Radlagerung nach Anspruch 9, **dadurch gekennzeichnet, dass** der bremsträgerfreie Bereich (B) auf das dem Ende (12) des Achsrohres (1) abgewandten Seite des Bremsträgers (10) liegt.

11. Radlagerung nach einem der Ansprüche 1 bis 10, **dadurch gekennzeichnet, dass** der bremsträgerfreie Bereich (B) des Achsrohres (19) gegenüber dem restlichen Achsrohr (1) verstärkt ist.

## Claims

1. A wheel bearing on an axle body taking the form of an axle tube (1) for vehicles, in particular utility vehicles, in which the wheel is fixed, using wheel bolts for example, to a wheel hub which is rotatably mounted on the axle journal (2) of the axle tube (1), and the axle journal (2) is braced, as a separate component, with an end portion (3) of the axle tube (1), **characterized in that** the end portion (3) of the axle tube (1) is formed so as to be cylindrical on the inside, and the axle journal (2), having a matching external cylindrical connector portion (5), is fitted into the end portion (3) of the axle tube (1), and the end portion (3) of the axle tube (1) is radially braced with the connector portion (5) of the axle journal (2) by means of at least one clamping piece (6), which can be adjusted in axial direction relative to the end (12) of the axle tube (1) by means of a threaded bolt (8).

2. A wheel bearing according to Claim 1, **characterized in that** the clamping piece (6) takes the form of a clamping cone (6) which cooperates with an inner conical surface (7) of the connector portion (5) of the axle journal (2), said inner conical surface (7) opening out towards the opposite end of the axle tube (1).

3. A wheel bearing according to Claim 1, **characterized in that** the clamping piece (6) takes the form of a clamping wedge (64) which cooperates with a diagonal surface (9) of the connector portion (5) of the axle journal (2), said diagonal surface (9) pointing towards the opposite end of the axle tube (1).

4. A wheel bearing according to Claim 1 or 2, **characterized in that** the wall (11) forming the inner conical surface (7) of the connector portion (5) has at least one expansion slot (4) which extends substantially parallel to the axis and is open at the inner end of the connector portion (5).

5. A wheel bearing according to one of Claims 1, 2 and 4, **characterized in that** the expansion slot (4) is conically tapered from the inner end of the connector portion (5) towards the end of the axle tube (1).

6. A wheel bearing according to Claim 5, **characterized in that** the clamping piece (6) takes the form of a cruciform member (6'''), which engages by way of its arms (13) in the conically tapered expansion slot (4).

7. A wheel bearing according to Claim 6, **characterized in that** the clamping element (6) has a substantially cylindrical outer circumference as determined by the arms (13) of the cross and is guided along the internally cylindrical end portion (3) of the axle tube (1).

8. A wheel bearing according to one of the preceding claims, **characterized in that** the threaded bolt (8) is received by way of a threaded portion (8') in an internal thread (15) of the clamping piece (6) and is rotatably mounted in the axle journal (2).

9. A wheel bearing according to one of the preceding claims, **characterized in that,** in a region (B) free of brake anchor plates, the clamping piece (6) acts upon the end portion (3) of the axle tube (1).

10. A wheel bearing according to Claim 9, **characterized in that** the region (B) which is free of brake anchor plates is located on the side of the brake anchor plate (10) away from the end (12) of the axle tube (1).

11. A wheel bearing according to one of Claims 1 to 10, **characterized in that** the region (B) of the axle tube (19) which is free of brake anchor plates is reinforced as against the rest of the axle tube (1).

## Revendications

1. Logement de roue situé sur un corps d'essieu ayant la forme d'un tube d'axe (1) pour un véhicule, notamment pour véhicule utilitaire, dans lequel la roue est fixée sur un moyeu de roue logé de façon à pouvoir tourner sur la fusée d'essieu (2) du corps d'essieu (1), par exemple au moyen de boulons de moyeu de roue, et la fusée (2) sous la forme d'une pièce séparée est reliée à une section finale (3) du corps d'essieu (1), **caractérisé en ce que** la section finale (3) du tube d'essieu (1) a une forme intérieure cylindrique, la fusée (1) est emboîtée dans la section finale (3) du tube d'essieu (1) par une section de raccordement (5) extérieurement cylindrique de façon correspondante, et la section finale (3) du tube d'essieu (1) est reliée radialement à la section de raccordement (5) de la fusée d'essieu (2) au moyen d'au moins un élément de serrage (6) qui peut être déplacé en direction axiale vers l'extrémité (12) du tube d'essieu (1) au moyen d'un boulon fileté (8).

2. Logement de roue selon la revendication 1, **caractérisé en ce que** l'élément de serrage (6) est conçu sous la forme d'un cône de serrage (6) qui coopère avec une surface interne conique (7) de la section de raccordement (5) de la fusée d'essieu (2), ladite surface interne conique s'ouvrant en direction de l'extrémité lui faisant face du tube d'essieu (1).

3. Logement de roue selon la revendication 1, **caractérisé en ce que** l'élément de serrage (6) est conçu sous la forme d'une clavette de serrage (6") qui coopère avec une surface inclinée (9) de la section de raccordement (5) de la fusée d'essieu (2), ladite surface inclinée montrant vers l'extrémité du tube d'essieu (1) lui faisant face.

4. Logement selon la revendication 1 ou 2, **caractérisé en ce que** la paroi (11) de la section de raccordement (5) qui forme la surface interne conique (7) présente au moins une fente d'expansion (4) essentiellement parallèle à l'axe et ouverte à l'extrémité intérieure de la section de raccordement (5).

5. Logement de roue selon l'une des revendications 1, 2 et 4, **caractérisé en ce que** la fente d'expansion (4) se rétrécit de façon conique depuis l'extrémité intérieure de la section de raccordement (5) en direction de l'extrémité du corps d'essieu (1).

6. Logement selon la revendication 5, **caractérisé en ce que** l'élément de serrage (6) est conçu sous la forme d'un corps en croix (6''') qui s'engage avec ses bras en croix (13) dans les fentes d'expansion (4) se rétrécissant de façon conique.

7. Logement de roue selon la revendication 6, **caractérisé en ce que** le corps de serrage (6) est conçu avec un pourtour défini par les bras en croix essentiellement cylindrique et est guidé à travers la section finale (3) du tube d'essieu (1) ayant une forme intérieure cylindrique.

8. Logement selon l'une des revendications précédentes, **caractérisé en ce que** le boulon fileté (8) est reçu avec une section filetée (8') dans un filetage interne (15) de l'élément de serrage (6) et peut être logé dans la fusée d'essieu (1) de façon à pouvoir tourner.

9. Logement selon l'une des revendications précédentes, **caractérisé en ce que** l'élément de serrage (6) agit sur la section finale (3) du tube d'essieu (1) dans une zone (B) libre de flasque de frein.

10. Logement selon la revendication 9, **caractérisé en ce que** la zone libre de flasque de frein (B) est située du côté de la face du flasque de frein (10) opposée à l'extrémité (12) du tube d'essieu (1).

11. Logement selon l'une des revendications 1 à 10, **caractérisé en ce que** la zone libre de flasque de frein (B) du tube d'essieu (1) est renforcée par rapport au reste du tube d'essieu (1).
